# EUROPEAN PATENT APPLICATION

(11) **EP 1 049 015 A2**
(43) Date of publication of application: **02.11.2000**
(21) Application number: 00660075.3
(22) Date of filing: 25.04.2000
(51) Int. Cl.: G06F 11/00

(54) **Method, system and device for identifying a detective plug-in unit**

(30) Priority: 28.04.1999 FI 990966
(71) Applicant: Nokia Networks OY, 00045 Nokia Group (FI)
(72) Inventor: Mäkipää, Olli, 00520 Helsinki (FI); Viranko, Jyrki, 02630 Espoo (FI)
(74) Representative: Simmelvuo, Markku Kalevi

(57) **Abstract**

The invention concerns a method, a system and an interface circuit for identifying a defective plug-in unit in a computer system comprising a CompactPCI bus (PCI) and plug-in units (2) connected to it via an interface circuit (1). In the method, the bus address being used in the bus is transferred into a first register (A) and the bus address is transferred in conjunction with a reboot from the first register (A) into the second register (B). The bus address can be read for fault diagnosis from the second register (B) by means of an operation and maintenance facility (4).

The invention makes it possible to locate faults in situations where bus release is not monitored in conjunction with the addressing sequence. In this situation, e.g. the DEVSEL# signal is active and the TRDY# signal inactive.

## Description

The present invention relates to telecommunication systems. In particular, the invention concerns a method, system a and a device for identifying a defective plug-in unit in a computer system.

### BACKGROUND OF THE INVENTION

In computer systems, standardized bus solutions are used to connect different peripherals or processor systems to each other. CompactPCI (PCI, Peripheral Component Interconnect) is a bus solution based on the PCI bus especially for computer systems designed for industrial use and/or for embedded applications, which is used in mechanically demanding conditions. The properties of the PCI bus are described in a publication called "PCI Local Bus Specification"; PCI Special Interest Group, June 1, 1995.

The units connected to the bus communicate with each other by using a special addressing sequence. In certain addressing sequences, the addressing unit goes on addressing the addressed unit until the addressed unit responds to the addressing. If the addressed unit is defective, then it cannot respond to the addressing, with the result that the entire computer or microprocessor system will remain waiting for the release of the address bus. The system is typically provided with a so-called watch dog timer, which has to be reset at predetermined intervals. If the watch dog is not reset, then the system will reboot or reset the computer. This may result in an endless loop and a crash of the system.

The problem in this situation is that, when the system reboots, it also loses the information regarding the addressing that caused the reboot. The diagnostics program of the system cannot determine the actual cause of the trouble, i.e. the unit that produced the trouble. Therefore, the user has to locate the fault by replacing each unit separately.

The object of the present invention is to eliminate the problems described above or at least to significantly reduce them. A further object of the invention is to disclose a new type of method, system and interface circuit by means of which a defective unit can be disconnected from a computer system in the event of a fault.

### BRIEF DESCRIPTION OF THE INVENTION

The invention concerns a method for identifying a defective plug-in unit in a computer system which comprises a first bus and an interface circuit provided with a first register and a second register. In addition, the system comprises at least two plug-in units connected via interface circuits to the first bus, and a second bus connected to at least one plug-in unit. Connected to the second bus is an operation and maintenance facility, by means of which the devices connected to the first bus can be controlled. In the method, the first plug-in unit addresses the second plug-in unit with a bus address. According to the invention, the bus address is transferred to the first register. In the event of a reboot, the bus address if transferred from the first register into the second register. In an embodiment, the bus address is read from the second register by the operation and maintenance facility. In an embodiment, the first bus is disposed in a CompactPCI bus.

The invention also concerns a system for identifying a defective plug-in unit, comprising the components described above. The system of the invention comprises means for transferring a bus address into the first register, means for transferring the bus address from the first register into the second register in conjunction with rebooting, and means for reading the bus address from the second register by using the operation and maintenance facility.

Moreover, the invention concerns an interface circuit, which comprises means for connecting a first bus to a plug-in unit, and a first and a second register. The interface circuit of the invention comprises means for transferring a bus address into the first register and means for transferring the bus address from the first register into the second register in conjunction with rebooting. In an embodiment, the interface circuit comprises means for sending the bus address from the second register to the operation and maintenance facility. In the system and interface circuit described above, the first bust is preferably a CompactPCI bus.

As compared with prior art, the present invention provides the advantage that a diagnostics program comprised in the system can disconnect a defective plug-in unit from the system without requiring any actions on the user's part. The invention makes it possible to locate faults in situations where bus release is not monitored in conjunction with the addressing sequence. In this case, e.g. in the CompactPCI bus, the DEVSEL# signal is active while the TRDY# signal is inactive. The registers comprised in the interface circuit can be economically implemented, so the invention is applicable in many different environments.

### LIST OF ILLUSTRATIONS

In the following, the invention will be described by the aid of a few examples of its embodiments with reference to the attached drawing, wherein:
Fig. 1 presents a diagram representing a system according to the invention; and
Fig. 2 presents a flow diagram representing an embodiment of the method of the invention.

### DETAILED DESCRIPTION OF THE INVENTION

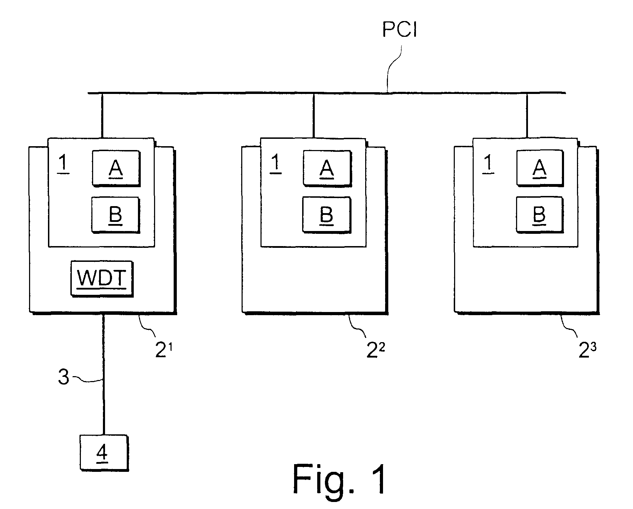

Fig. 1 is a diagrammatic illustration of a system according to the invention. The system comprises a first bus PCI, which in this example is a CompactPCI bus. Connected to the CompactPCI bus are a number of plug-in units 2¹, 2², 2³ using interface circuits 1. A plug-in unit 2 comprised in the system may be e.g. a master computer 2¹ of the bus; the system may comprise one or more such computers. The plug-in unit 2 may also be a slave computer 2², an embedded system or an accessory 2³ enhancing the properties of the system. In this example, the interface circuit 1 is implemented as a separate component in conjunction with the plug-in unit 2. The interface circuit 1 is e.g. a functional unit implemented using an FPGA circuit (FPGA, Field Programmable Gate Array), allowing certain functions of the plug-in unit 2 as well to be implemented on the same FGPA circuit. The functions corresponding to the FGPA circuit can also be implemented using discrete components or an ASIC circuit (ASIC, Application-Specific Integrated Circuit).

The interface circuit 1 comprises the means needed for implementing the communication between the plug-in unit 2 and the first bus PCI. The interface circuit 1 comprises a first register A and a second register B. The registers can be implemented using e.g. FPGA circuit registers, an ASIC, memory or register circuit. The master computer 2¹ connected to the bus comprises a watch dog WDT, which watches the computer system set up around the first bus PCI. The watch dog WDT monitors the execution times of the tasks in the computer system and performs a reboot if the execution time exceeds a predetermined time limit. The watch dog WDT may also be located elsewhere in conjunction with the bus PCI, in a place from where it is able to trigger a reboot of the system.

Connected via a second bus 3 to one of the plug-in units 2 is an operation and maintenance facility 4. The protocol in the second bus 3 is e.g. the Message Bus protocol used in Nokia computer systems. In the example, the operation and maintenance facility is connected to the master computer 2¹, but the plug-in unit 2 may also consist of a plug-in unit specialized in external bus traffic. An example of the computer system referred to is the DX200 switching system manufactured by Nokia.

In certain addressing modes of the CompactPCI bus, the addressing sequence does not keep track of bus release. If a plug-in unit is defective, it may keep the DEVSEL# signal active and the TRDY# signal inactive. When the DEVSEL# signal is active, the addressing unit is notified that the addressed unit has resolved the address. The TRDY# signal is used to indicate that the addressed unit is ready to terminate the phase of the transaction.

The interface circuit 1 comprises means for transferring the bus address to be presented in conjunction with bus addressing into the first register A. For the event of a reboot, the interface circuit 1 comprises means for transferring the bus address from the first register A into the second register B. A reboot is detected by the RST# signal in the first bus PCI or by a separate signal. The system comprises means used by the operation and maintenance facility 4 to read the bus address from the second register B. These means may be implemented in the master computer 2¹, which case it will take care of the exchange of messages between the interface circuit 1 and the operation and maintenance facility 4.

The function of the invention can be implemented in a distributed fashion in all the interface circuits 1 or in only some of them. The operation and maintenance facility 4 can read the second register B of any one of the interface circuits 1.

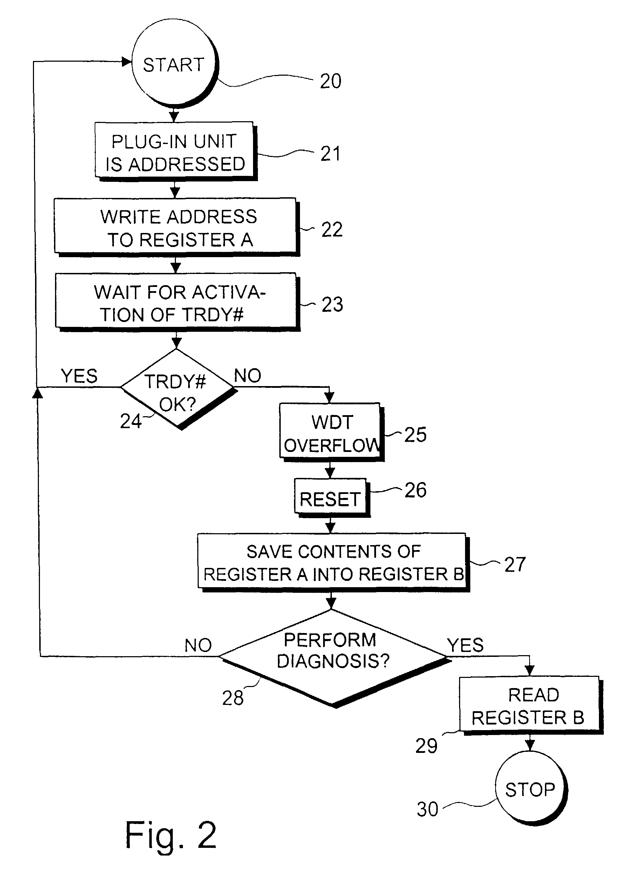

Fig. 2 presents a flow diagram representing an embodiment of the method of the present invention. The method starts with step 20. In step 21, a first plug-in unit 2¹ addresses a second plug-in unit 2² in such manner that the second plug-in unit 2² is required to acknowledge the addressing in order that the procedure can continue. In this situation, the DEVSEL# signal in the bus PCI is active and the TRDY# signal is inactive. The interface circuit 1 writes the bus address from the PCI bus into register A, step 22. In step 23, a watch dog WDT implemented in the master computer 2¹ is waiting to see if the second plug-in unit 2² will activate the TRDY# signal.

In step 24, a selection is made; if the second plug-in unit 2² activates the TRDY# signal, then the procedure will return to step 20, the watch dog WDT is refreshed and operation is continued as normal. The first bus PCI remains unreleased if a failure has occurred in the second plug-in unit 2², e.g. the fuse of the plug-in unit has been blown. If the TRDY# signal is not activated, then the procedure will go on to step 25, where the time limit predetermined for the watch dog WDT is reached and an overflow occurs in the watch dog WDT. In step 26, the system is reset, i.e. rebooted. In step 27, the interface circuit 1 detects the reboot and transfers the bus address stored in the first register A into the second register B. The system cannot read the bus address that preceded the reboot from the first register A because it is overwritten by the bus addresses transmitted in the bus in conjunction with rebooting.

In step 28, another selection is made; if no system diagnosis is performed, then normal operation is resumed. If a diagnosis is performed, then the procedure goes on to step 29, where an operation and maintenance facility 4 connected to the master computer 2¹ via a second bus 3 reads the second register B to determine the bus address that was present in the first bus PCI before the reboot. The plug-in unit responsible for the failure can be determined by this bus address. The operation and maintenance facility 4 prints out the address of the defective plug-in unit in a readable form for the operating personnel. The operation and maintenance facility 4 may also send the address of the defective plug-in unit to the master computer 2¹, so that the latter can disconnect the defective plug-in unit from the system automatically.

The invention is not restricted to the examples of its embodiments described above, but many variations are possible within the scope of the inventive idea defined in the claims.

## Claims

1. Method for identifying a defective plug-in unit in a system comprising
a first bus (PCI) ;
an interface circuit (1) provided with a first register (A) and a second register (B);
at least two plug-in units (2) connected via interface circuits (1) to the first bus (PCI) ;
a second bus (3) connected to at least one plug-in unit (2¹) ; and an operation and maintenance facility (4) connected to the second bus (3); and
in which method the first plug-in unit (2¹) addresses the second plug-in unit (2²) with a bus address, **characterized** in that:
the bus address is transferred into the first register (A); and
the bus address is transferred in conjunction with a reboot from the first register (A) into the second register (B).

2. Method as defined in claim 1, **characterized** in that the bus address is read from the second register (B) by means of the operation and maintenance facility (4).

3. Method as defined in claim 1 or 2, **characterized** in that the first bus (PCI) is disposed in a CompactPCI bus.

4. System for identifying a defective plug-in unit, said system comprising:
a first bus (PCI) ;
an interface circuit (1) provided with a first register (A) and a second register (B);
at least two plug-in units (2) connected via interface circuits (1) to the first bus (PCI), a first plug-in unit (2¹) comprising means for addressing a second plug-in unit (2²) with a bus address;
a second bus (3) connected to at least one plug-in unit (2¹) ; and
an operation and maintenance facility (4) connected to the second bus (3), **characterized** in that the system comprises:
means for transferring the bus address into the first register (A) ;
means for transferring the bus address in conjunction with a reboot from the first register (A) into the second register (B); and
means for reading the bus address from the second register (B) by using the operation and maintenance facility (4) .

5. System as defined in claim 4, **characterized** in that the first bus (PCI) is a CompactPCI bus.

6. Interface circuit (1), comprising:
means for connected a first bus (PCI) to a plug-in unit (2) ;
a first register (A); and
a subscriber (B), **characterized** in that the interface circuit comprises:
means for transferring the bus address into the first register (A); and
means for transferring the bus address in conjunction with a reboot from the first register (A) into the second register (B) .

7. Interface circuit as defined in claim 6, **characterized** in that the interface circuit (1) comprises means for sending the bus address from the second register (B) to the operation and maintenance facility (4) .

8. System as defined in claim 6 or 7, **characterized** in that the first bus (PCI) is a CompactPCI bus.
